# EUROPEAN PATENT APPLICATION

(11) **EP 1 684 297 A1**
(43) Date of publication of application: **26.07.2006**
(21) Application number: 05250297.8
(22) Date of filing: 21.01.2005
(51) Int. Cl.: G11B 33/04

(54) **Data uploading device**

(71) Applicant: ORIGGIO LIMITED, Buckland, Hertfordshire SG9 0RU (GB)
(72) Inventor: Bertram, William Halsey Ricardo, WIlburton Ely Cambs CB6 3RQ (GB)
(74) Representative: Brunner, Michael John

(57) **Abstract**

An apparatus is provided for uploading digital data to a plurality of memories, each memory being mounted on a support and each memory having an input through which the data can be uploaded, the apparatus comprising: an input end for storing the supports prior to the data being uploaded onto the memories; an output end for receiving the supports which have been uploaded with the data; a conveyor for moving the supports from the input end to the output end; a plurality of sets of upload contacts positioned adjacent to the conveyor on a carriage arranged to move parallel to the conveyor, each set of upload contacts being arranged to connect with a memory input moving from the input end to the output end on the conveyor; whereby, in use, the data can be simultaneously uploaded to each memory through the sets of upload contacts while the conveyor moves the supports from the input end to the output end; and the carriage being arranged to return to the input end when the data is uploaded.

## Description

The present invention relates to an apparatus and method which enables data to uploaded into a memory. More particularly, the invention relates to a device which is capable of uploading data into a plurality of memories simultaneously.

The invention is particularly designed for uploading audio data onto a packaging container, the packaging container being such as disclosed in our application WO 03/065375.

It is an aim of the present invention to provide an apparatus and method which can upload data onto a plurality of memories in a highspeed manner.

According to a first aspect of the present invention there is provided an apparatus for uploading digital data to a plurality of memories, each memory being mounted on a support and each memory having an input through which the data can be uploaded, the apparatus comprising:
an input end for storing the supports prior to the data being uploaded onto the memories;
an output end for receiving the supports which have been uploaded with the data;
a conveyor for moving the supports from the input end to the output end;
a plurality of sets of upload contacts positioned adjacent to the conveyor on a carriage arranged to move parallel to the conveyor, each set of upload contacts being arranged to connect with a memory input moving from the input end to the output end on the conveyor;
whereby, in use, the data can be simultaneously uploaded to each memory through the sets of upload contacts while the conveyor moves the supports from the input end to the output end; and
the carriage being arranged to return to the input end when the data is uploaded.

Therefore, it is possible for data to uploaded to a plurality of memories in a quick and efficient manner.

The input end may be arranged to store supports in the form of a CD or DVD insert tray.

Preferably, the input end is arranged to store the supports in a vertical stack at the input end prior to the being uploaded onto the memories.

The apparatus may further comprise an escapement mechanism arranged to release the bottommost support in the stack onto the conveyor.

Preferably, the output end is arranged to receive the supports which have been uploaded with the data and store them in a vertical stack.

The apparatus may further comprise an escapement mechanism arranged to lift the supports from the conveyor into the vertical stack.

The carriage may be arranged to grip the supports in order to connect with the memory inputs.

Preferably, the plurality of sets of upload contacts are connected to a computer to receive data for uploading. The computer may control the movements of the components discussed above.

According to a second aspect of the present invention there is provided a method for uploading digital data to a plurality of memories, each memory being mounted on a support and each memory having an input through which the data can be uploaded, the method comprising the steps of:
storing the supports at an input end of an apparatus, prior to the data being uploaded onto the memories;
moving the supports from the input end to an output end;
connecting a plurality of sets of upload contacts with each moving memory input;
simultaneously uploading the data to each memory through the sets of upload contacts while the supports are moving from the input end to the output end;
moving the plurality of sets of upload contacts from the output end to the input end when the data is uploaded.

An example of the apparatus according to the invention will now be described with reference to the accompanying drawings, in which:
Figure 1 is an isometric view of a support for a CD jewel case.
Figure 2 is an isometric view of the apparatus according to the invention.
Figure 3 is an isometric view of the input end of the apparatus.
Figure 4 is a partial cross-sectional view of the uploading components of the apparatus.
Figure 5 is an isometric view of the uploading components of the apparatus.

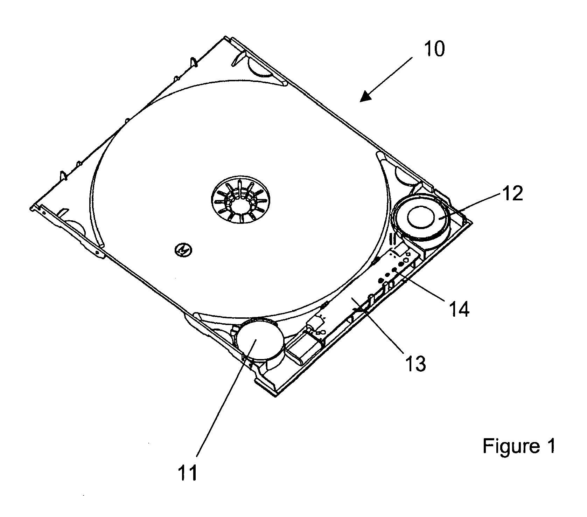

A support tray 10 for a CD jewel case (not shown) is shown in Figure 1. The tray 10 has mounted on it, a battery 11, a speaker 12 and a PCB 13. The PCB has attached to it a flash memory in which one or more pieces of audio data can be stored. When a button on the front of the jewel case and attached to the PCB (but not shown in Figure 1) is actuated, the speaker plays the audio data stored in the flash memory. The battery 11 provides power to the PCB 13 and to the speaker 12. Connected to the PCB is a set of input contacts 14, through which the audio data can be uploaded to the flash memory. Although this description relates to uploading data onto a memory in a CD jewel case, the invention is not limited to this specific application. For instance, data can be uploaded to memories provided on greeting cards or other forms of packaging.

As described in WO 03/065375, samples of audio data can be stored in the flash memory. A user, on a PC for example, connected to the device creates a compilation of audio files that are required to be stored in the flash memory for future playing. This compilation may be compressed to a suitable size for the flash memory, the first stage of the process being to convert the raw audio data, which is in WAV or MP3 stereo, in a number of different frequencies, into mono at a frequency of 8Khz. This first stage is achieved by Pulse Code Modulation (PCM). The PCM data is then compressed further by standard ADPCM, Adaptive Differential PCM. A piece of software then sends the compressed compilation to the apparatus of the invention which will upload the data onto a plurality of memories.

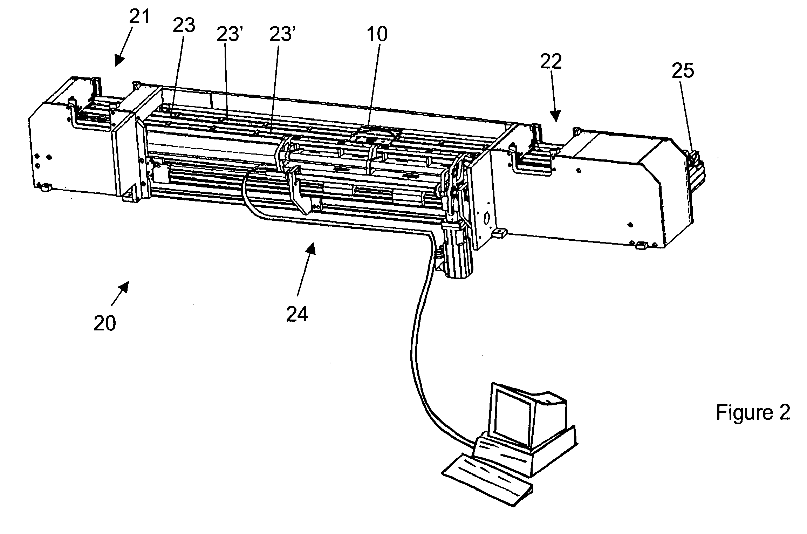

Figure 2 shows an apparatus 20 for uploading audio data onto a plurality of support trays 10 in a high speed manner. The apparatus 20 is loaded at one end 21 with trays 10 and unloaded at an opposite end 22. A vertical stack of trays 10 is loaded at the input end 21 where an escapement mechanism allows the trays to be lowered, from the bottom of the stack of tray, one at a time onto a transfer conveyor 23 formed from two endless belts 23'.

Each of the belts 23' are toothed belts which are driven such that they move the trays 10 along step by step in the longitudinal axis of the machine. The conveyor is powered by a servo motor 25, each belt 23' being indexed by the motor 25 so that the position of each tray 10 on the conveyor 23 defined. The belts 23' are provided with flights protruding outwardly from the surface of the belt and the trays 10 are located between these flights.

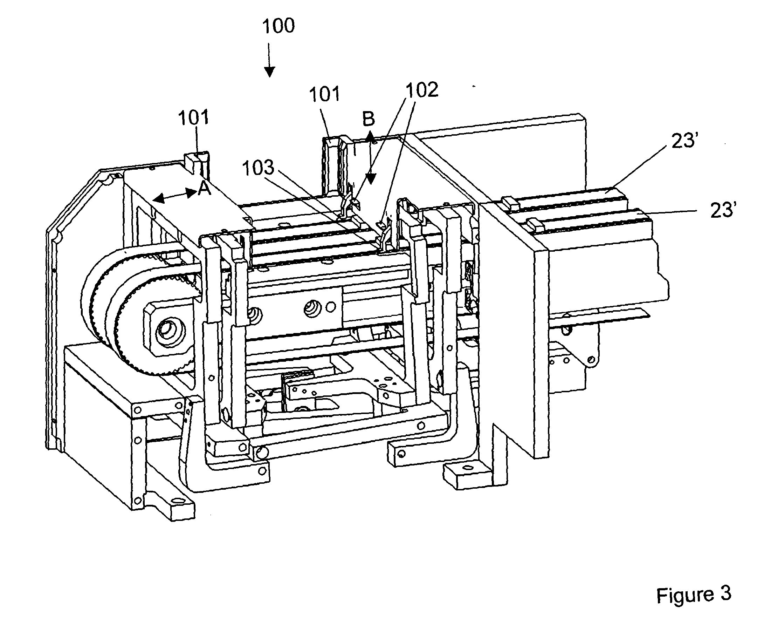

Figure 3 shows in detail the components in the escape mechanism used for releasing the trays 10 onto the conveyor 23. As noted above, the trays 10 are arranged in a vertical stack and the stack is then loaded into a hopper 100 at the input end 21 of the apparatus 20 having the input escapement mechanism. The input escapement hopper 100 consists of guides 101 provided for each corner of the trays 10 which hold the trays in a vertical stack. The bottommost tray 10 of the stack is supported on four escapement fingers 102 that maintain the stack at a vertical predetermined position above the conveyor 23. The two sides of the tray 10, which are perpendicular to the direction of movement of the conveyor 23, are each supported by two of the escapement fingers 102.

The escapement fingers 102 can move in and out, in the directions indicated by arrows A, that is in the directions parallel to the direction of movement of the conveyor 23.

Adjacent to the escapement fingers 102 are lifting fingers 103 which act to lower the bottommost tray 10 onto the conveyor 23. The lifting fingers 102 move in the directions indicated by the arrows A and B.

The process of releasing a tray 10 from the stack of trays 10 is as follows. The stack is held in a first vertical position above the conveyor 23 by the escapement fingers 102. The lifting fingers 103 are also in contact with the bottommost tray 10, and thus support the bottommost tray 10. The lifting fingers are then raised slightly in the direction B to a second vertical position, which raises the stack slightly and acts to take the weight of the stack off the escapement fingers 102. The escapement fingers 102 then retract away from the stack in the direction A while the lifting fingers 103 hold the stack in the slightly raised position above the conveyor 23. The lifting fingers 103 are then lowered, by the height of a single tray 10, towards the conveyor 23 to a third vertical position. The escapement fingers 102 then move towards the stack and support the second bottommost tray 10 which is at the first vertical position. At this stage the bottommost tray 10 is lowered by the lifting fingers 103 to the conveyor 23. The second bottommost tray (and therefore the trays above it) are still supported by the escapement fingers 102 at the first vertical position.

The bottommost tray 10 which is held by the lifting fingers 103 is released onto the conveyor 23 by moving the lifting fingers in the direction A away from the tray 10. The lifting fingers 103 (which now do not support a tray 10) are then raised towards the stack in the direction B and move inwards in the direction A to the first vertical position. The process is then repeated to release the next tray 10 onto the conveyor 23 by raising the lifting fingers 103 to the second vertical position.

The escapement fingers 102 and the lifting fingers 103 are driven by a motor which rotates a shaft. Cams 104 connected to the shaft retract and protract the fingers 102 and 103 and also lift fingers 103 up and down.

The trays 10 are released onto the conveyor 23 when the conveyor is stationary between indexes. This allows the tray 10 to be located at a known position on the conveyor 23 between the flights described above. When the conveyor indexes to its next location, the next tray 10 is released onto the conveyor.

While the trays 10 are being transported on the conveyor from the input end 21 to the output end 22, the trays are connected to an upload carriage 24 (shown in Figure 2) during part of their travel which uploads the audio data into the memories on the PCBs 13 provided on the tray 10.

The upload carriage 24 slides parallel to the conveyor. Upload contacts are provided on the upload carriage which connect with the upload contacts 14 provided on the PCB to upload the audio data to the flash memory. The upload carriage has four sets of upload contacts 201 mounted to it. Prior to any data being uploaded to the trays 10, the upload carriage 24 is driven to a position near the input end 21 and when four trays 10 are on the conveyor 23, all four trays are gripped by the upload carriage 24 and the edges of the trays nearest the upload carriage 24 are lifted clear of the conveyor. When the edges of the trays 10 are lifted from the conveyor, the uploading can commence. While the data is being uploaded, the upload carriage 24 travels with the conveyor 23. The uploading continues for about 3 indexes of the conveyor 23 and then the upload carriage 24 releases the trays 10 onto the conveyor 23. During the fourth index of the conveyor, the upload carriage 24 returns to the input end 21 ready to upload data to the next four trays 10.

The uploading takes approximately 1.7 seconds, which allows for a throughput of approximately 80 trays per minute. The upload contacts 201 are connected to a PCB (not shown) mounted on the carriage. The audio data received from the PC needs to be converted to a serial format for the flash memory on the tray 10. This is achieved by a serial peripheral interface on the PCB. The upload carriage is connected via a ribbon cable to the PC and the data to be uploaded is transmitted along this cable.

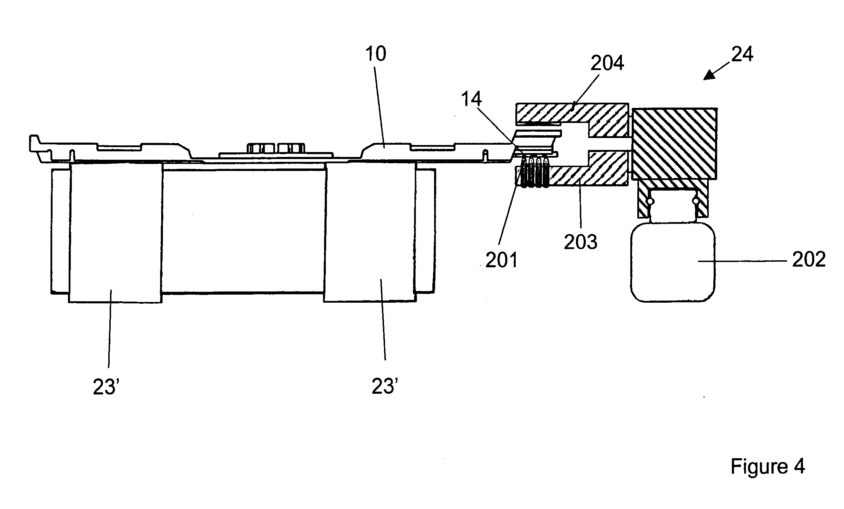

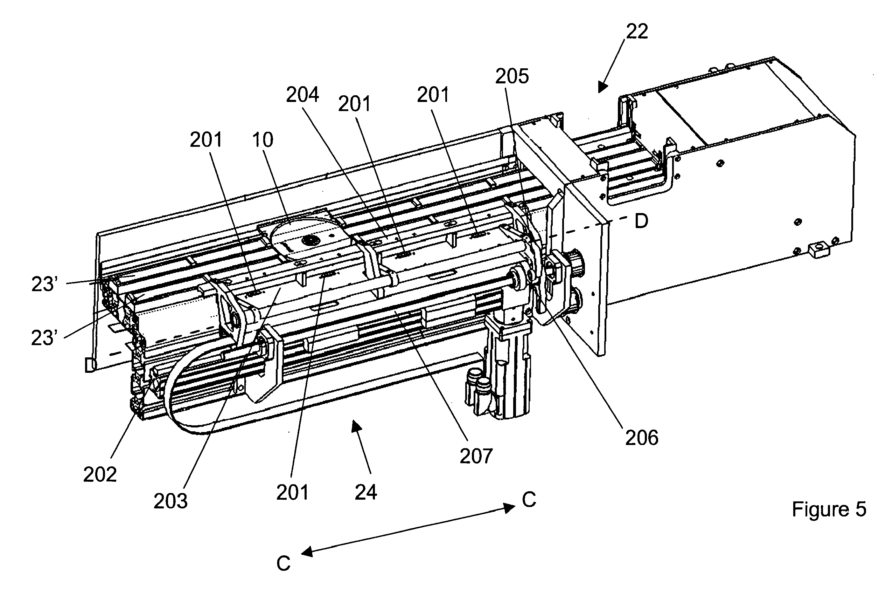

The process of uploading the data onto the flash memories on the trays 10 is described briefly in relation to Figure 4 and then in more detail in relation to Figure 5. Figure 4 shows a partial cross-section of the apparatus, the cross-section being perpendicular to the direction of movement of the transfer conveyor 23. The upload carriage 24 is arranged to move parallel to the transfer conveyor 23 (in the direction indicated by arrow C-C Figure 5). Four sets of upload carriage contacts 201 are provided on the upload carriage and these upload carriage contacts connect with the contacts 14 on the tray 10. The upload carriage contacts 201 are in the form of spring pins 201' and simply press against the contacts 14 in order to make a connection for uploading the data. When the spring pins 201' connect to the upload contacts 14, this lifts the edge of each tray 10 from the conveyor 23. The upload contacts are connected to a PC, say, (shown in Figure 2) which stores the audio data which is to be uploaded to the flash memory on the tray 10.

The upload carriage 24 is mounted on and slides along a bearing slide 202 running parallel to the conveyor 23. Provided inside the bearing slide 202 is a toothed belt (not shown) and this toothed belt contacts with a toothed wheel (also not shown) on the upload carriage 24 to drive the upload carriage parallel to the conveyor 23. The toothed belt is rotated by a servo motor and this motor is a slave to the conveyor servo motor 25 so as to move in synchronisation with it.

The upload contacts 201 come into contact with the input contacts 14 when a lower bar 203, on which the contacts 201 are mounted, is raised relative to the conveyor 23. When the lower bar 203 is raised, the trays 10 are gripped between the lower bar and an upper bar 204 which remains at a stationary vertical position above the conveyor 23. This has the effect of lifting the edges of the trays 10 clear of the conveyor 23.

Referring to Figure 5, the lower bar 203 is raised by rotating it about an axis D-D offset from the longitudinal axis of the lower bar. The lower bar 203 is connected to a first end of a bracket 205 which pivots about the axis D-D. The second end of the bracket 205 follows a cam 206, and when the cam rotates, the lower bar is 203 is raised and lowered.

The lower and upper bars 203 and 204, the bracket 205 and the cam 206 are all provided on the upload carriage 24, such that when the upload carriage slides, they move with it. The cam 206 is mounted on a shaft 207 which does not slide with the upload carriage 24 and the shaft is rotated by a motor (not shown). The cam 207 is mounted that such when the upload carriage 24 slides parallel to the conveyor, the cam slides along the shaft with the upload carriage. However, the cam does not rotate relative to the shaft, ie. it rotates with the shaft whilst sliding along the shaft. This is achieved by two longitudinal grooves (not shown) in the shaft 207 and ball bearings (also not shown) in the cam 206.

The movements of the conveyor 23 and the upload carriage 24 are synchronised until the uploading has been completed. When the uploading process has been completed, the lower bar 203 is lowered by the cam and consequently the trays 10 are released from the carriage 24 onto the conveyor 23. The upload carriage 24 then retracts back four indexes on the conveyor 23 to return to the input end to enable uploading of the audio data to the next four trays, i.e. to repeat the cycle.

The length of the conveyor is related to the number of trays that the upload carriage can connect to. In this example, the upload carriage 24 connects to four trays 10, uploads data onto the trays over three indexes of the conveyor 23 and then returns to the input end as the conveyor 23 indexes to the fourth position. At the input end, there will be four new trays waiting to be picked up by the upload carriage. While the upload carriage 24 is uploading the data to the memory on the trays 10 over the course of three indexes, three trays 10 can be released from the input stack of trays 10 onto the conveyor 23. As the carriage 24 returns during the fourth index, a fourth tray can be released onto the conveyor 23. Therefore, the conveyor needs to be able to support the four trays connected to the upload carriage 24 and three further trays which have not yet been connected to the carriage 24, i.e it need to be able to support seven trays at any one time.

When the trays 10 reach the output end 22 of the apparatus, the audio data has been uploaded and the trays 10 are pushed upwards to form an output stack. The trays 10 are added to the output stack one at a time and to the bottom of the stack.

The trays 10 are lifted from the conveyor 23 at the output end 22 of the apparatus 20 by an output escapement mechanism. The output escapement mechanism works in a similar manner to the input escapement mechanism. The trays move on the conveyor 23 to a position below the output escapement. Whilst the conveyor 23 is stationary between indexes and a first tray 10 is beneath the output escapement mechanism, lifting fingers are lowered down to the conveyor and retract inwards towards the tray 10. The tray 10 is then lifted clear from the conveyor by the lifting fingers. When the tray reaches the vertical position above the conveyor 23 where the bottommost tray will be located, escapement fingers (situated immediately above the tray) retract away from the tray 10. The tray 10 is then raised by the height of a single tray 10 and the escapement fingers move back towards the tray to support it (underneath the tray), along with the lifting fingers. The lifting fingers are now lowered towards the conveyor 23 and retracted away from the tray 10. A second tray is then retrieved from the conveyor 23 in a similar manner to the first tray. The second tray is brought to the vertical position above the conveyor 23 and when the escapement fingers retract away from the underneath of the first tray, the first tray rests on top of the second tray. The lifting fingers are raised by the height of a single tray again, which lifts both the first and second trays. The escapement fingers move towards the trays and supports the second tray which is the bottommost tray. The lifting fingers are then lowered to retrieve a third tray 10 and in this way, the output stack is formed.

The output escapement mechanism is powered in a similar fashion to the input escapement mechanism, i.e. by cams, but it is driven by a separate motor to the one that drives the input escapement mechanism.

When the uploading has been completed for the four trays 10 connected to the upload carriage 24 and while they are still connected, the upload apparatus verifies that the audio data has been uploaded successfully onto the flash memory for each tray. If the verification for a tray fails then the output escapement mechanism is operated to prevent lifting that tray onto the output stack. This is simply achieved by not moving the lifting fingers and escapement fingers for this particular index. Instead the rejected tray continues on the conveyor 23 and falls into a reject chute (not shown) at the end of the conveyor 23.

## Claims

1. An apparatus for uploading digital data to a plurality of memories, each memory being mounted on a support and each memory having an input through which the data can be uploaded, the apparatus comprising:
an input end for storing the supports prior to the data being uploaded onto the memories;
an output end for receiving the supports which have been uploaded with the data;
a conveyor for moving the supports from the input end to the output end;
a plurality of sets of upload contacts positioned adjacent to the conveyor on a carriage arranged to move parallel to the conveyor, each set of upload contacts being arranged to connect with a memory input moving from the input end to the output end on the conveyor;
whereby, in use, the data can be simultaneously uploaded to each memory through the sets of upload contacts while the conveyor moves the supports from the input end to the output end; and
the carriage being arranged to return to the input end when the data is uploaded.

2. An apparatus according to claim 1, wherein the input end is arranged to store supports in the form of a CD or DVD insert tray.

3. An apparatus according to claim 1, wherein the input end is arranged to store the supports in a vertical stack at the input end prior to the being uploaded onto the memories.

4. An apparatus according to claim 3, further comprising an escapement mechanism arranged to release the bottommost support in the stack onto the conveyor.

5. An apparatus according to claim 1, wherein the output end is arranged to receive the supports which have been uploaded with the data and store them in a vertical stack.

6. An apparatus according to claim 5, further comprising an escapement mechanism arranged to lift the supports from the conveyor into the vertical stack.

7. An apparatus according to claim 1, wherein the carriage is arranged to grip the supports in order to connect with the memory inputs.

8. An apparatus according to claim 1, wherein the plurality of sets of upload contacts are connected to a computer to receive data for uploading.

9. An apparatus according to claim 8, wherein the computer controls the movements of the components in the preceding claims.

10. A method for uploading digital data to a plurality of memories, each memory being mounted on a support and each memory having an input through which the data can be uploaded, the method comprising the steps of:
storing the supports at an input end of an apparatus, prior to the data being uploaded onto the memories;
moving the supports from the input end to an output end;
connecting a plurality of sets of upload contacts with each moving memory input;
simultaneously uploading the data to each memory through the sets of upload contacts while the supports are moving from the input end to the output end;
moving the plurality of sets of upload contacts from the output end to the input end when the data is uploaded.
